# EUROPEAN PATENT APPLICATION

(11) **EP 4 606 927 A1**
(43) Date of publication of application: **27.08.2025**
(21) Application number: 23906345.6
(22) Date of filing: 03.08.2023
(51) Int. Cl.: C23C 22/00, C21D 9/46, C22C 38/00, C22C 38/60, C23C 22/78, H01F 1/147

(54) **METHOD FOR PRODUCING ELECTRICAL STEEL SHEET EQUIPPED WITH INSULATING COATING FILM**

(30) Priority: 20.12.2022 JP 2022203363
(71) Applicant: JFE Steel Corporation, Tokyo 100-0011 (JP)
(72) Inventor: KOKUFU, Karin, Tokyo 100-0011 (JP); TERASHIMA, Takashi, Tokyo 100-0011 (JP)
(74) Representative: Grünecker Patent- und Rechtsanwälte PartG mbB
(86) International application number: PCT/JP2023/028419
(87) International publication number: WO 2024/134962

(57) **Abstract**

A pretreatment coating is formed by applying a pretreatment coating-forming agent onto an electrical steel sheet having a forsterite coating, followed by baking at 130 to 600°C in an atmosphere in which a hydrogen concentration is 0.01 to 10.0 vol%; subsequently the electrical steel sheet is cooled to 100°C or lower; and an insulating coating is formed by applying an insulating coating-forming agent onto the pretreatment coating, followed by baking at 600 to 1,000°C. In the pretreatment coating-forming agent, the chromium compound content is 1.00 parts by mass or less with respect to 100 parts by mass of a phosphate. The insulating coating-forming agent contains a cationic surfactant and has a chromium compound content of 1.00 parts by mass or less and a colloidal silica content of 50 to 250 parts by mass with respect to 100 parts by mass of a phosphate. The total coating amount of the pretreatment coating and the insulating coating is 7.5 g/m² or less. With this, an electrical steel sheet provided with an insulating coating that is excellent in appearance, rust resistance, heat resistance, and a lamination factor is obtained.

## Description

### TECHNICAL FIELD

The present invention relates to a method for producing an electrical steel sheet provided with an insulating coating.

### BACKGROUND ART

In general, an electrical steel sheet has, on its surface, a coating that imparts such properties as insulation properties, seizure resistance, and rust resistance. For example, a grain oriented electrical steel sheet has a forsterite-containing coating (forsterite coating) formed on a surface of a steel sheet during finishing annealing, and an insulating coating formed thereon.

The insulating coating is formed by applying an insulating coating-forming agent containing a phosphate onto the forsterite coating, followed by baking at a high temperature. For instance, Patent Literatures 1 and 2 each describe formation of an insulating coating by use of an insulating coating-forming agent containing a phosphate, colloidal silica, and a chromium compound (chromic anhydride).

### CITATION LIST

### PATENT LITERATURE

Patent Literature 1: JP 50-79442 A
Patent Literature 2: JP 48-39338 A
Patent Literature 3: WO 2020/026627
Patent Literature 4: JP 9-272982 A
Patent Literature 5: JP 2013-542323 A

### SUMMARY OF INVENTION

### TECHNICAL PROBLEMS

When the wettability between an insulating coating-forming agent and a forsterite coating is insufficient, repelling of the insulating coating-forming agent (liquid repelling), occurrence of ribbing defects, insufficient leveling, and the like may be caused, and the resulting insulating coating may have an uneven film thickness. In this case, the appearance cannot be said to be good.

Since it is often the case that plural electrical steel sheets are laminated to be used as an iron core, a uniform, beautiful, and good appearance is strongly required to avoid the deterioration of a lamination factor.

Meanwhile, there is recently a growing demand for chromium-free products from the viewpoint of environmental conservation, and a coating free from a chromium compound has been desired also in electrical steel sheets.

However, a so-called chromium-free insulating coating-forming agent that does not contain a chromium compound has insufficient wettability with respect to a forsterite coating, and accordingly, a uniform, beautiful, and good appearance cannot be obtained.

Patent Literatures 3 to 5 each disclose a technique of obtaining an insulating coating having a good appearance by using a chromium-free insulating coating-forming agent.

According to the present inventor's study, however, an electrical steel sheet provided with an insulating coating as obtained by using the technique described in each of Patent Literatures 3 to 5 has been found to be insufficient in at least one of heat resistance, rust resistance, and a lamination factor in some cases.

The present invention has been made in view of the foregoing and has an object of obtaining an electrical steel sheet provided with an insulating coating that is excellent in appearance, rust resistance, heat resistance, and a lamination factor.

### SOLUTION TO PROBLEMS

The present inventors have made an intensive study and as a result found that when the configuration described below is employed, the foregoing object is achieved. The invention has been thus completed.

Specifically, the present invention provides the following [1] to [5].
[1] A method for producing an electrical steel sheet provided with an insulating coating, the method comprising:
   forming a pretreatment coating by applying a pretreatment coating-forming agent onto an electrical steel sheet having a forsterite coating, followed by baking at a baking temperature of 130 to 600°C in a baking atmosphere in which a hydrogen concentration is 0.01 to 10.0 vol%;
   subsequently cooling the electrical steel sheet to a steel sheet temperature of 100°C or lower; and
   forming an insulating coating by applying an insulating coating-forming agent onto the pretreatment coating, followed by baking at a baking temperature of 600 to 1,000°C,
   wherein the pretreatment coating-forming agent contains a phosphate,
   in the pretreatment coating-forming agent, a content of a chromium compound is, in terms of an amount of elemental chromium, 1.00 parts by mass or less with respect to 100 parts by mass of solid contents of the phosphate,
   the insulating coating-forming agent contains a phosphate, colloidal silica, and a cationic surfactant,
   in the insulating coating-forming agent, a content of a chromium compound is, in terms of an amount of elemental chromium, 1.00 parts by mass or less with respect to 100 parts by mass of solid contents of the phosphate,
   in the insulating coating-forming agent, a content of the colloidal silica is, in terms of an SiO₂ solid content, 50 to 250 parts by mass with respect to 100 parts by mass of solid contents of the phosphate, and
   a total coating amount of the pretreatment coating and the insulating coating per one side is 7.5 g/m² or less.
[2] The method for manufacturing an electrical steel sheet provided with an insulating coating according to [1] above,
   wherein in the insulating coating-forming agent, a content of the cationic surfactant is 0.2 to 7.0 parts by mass with respect to 100 parts by mass of solid contents of the phosphate.
[3] The method for manufacturing an electrical steel sheet provided with an insulating coating according to [1] or [2] above,
   wherein the insulating coating-forming agent contains a metal compound, and
   in the insulating coating-forming agent, a content of the metal compound is, in terms of an amount of metal element, 5 to 60 parts by mass with respect to 100 parts by mass of solid contents of the phosphate.
[4] The method for manufacturing an electrical steel sheet provided with an insulating coating according to any one of [1] to [3] above,
   wherein the pretreatment coating-forming agent contains colloidal silica.
[5] The method for manufacturing an electrical steel sheet provided with an insulating coating according to [4],
   wherein in the pretreatment coating-forming agent, a content of the colloidal silica is, in terms of an SiO₂ solid content, 30 to 230 parts by mass with respect to 100 parts by mass of solid contents of the phosphate.

### ADVANTAGEOUS EFFECTS OF INVENTION

The present invention can provide an electrical steel sheet provided with an insulating coating that is excellent in appearance, rust resistance, heat resistance, and a lamination factor.

### DESCRIPTION OF EMBODIMENTS

### [Method for producing electrical steel sheet provided with insulating coating]

In a method for producing an electrical steel sheet provided with an insulating coating according to the present embodiment (hereinafter also referred to as "present producing method"), in short, a pretreatment coating-forming agent is applied onto an electrical steel sheet having a forsterite coating and baked to form a pretreatment coating, firstly. Subsequently, the electrical steel sheet having the pretreatment coating formed thereon is cooled, and an insulating coating-forming agent is applied onto the pretreatment coating and baked to form an insulating coating.

An electrical steel sheet provided with an insulating coating produced by the present producing method is excellent in all of appearance, rust resistance, heat resistance, and a lamination factor.

The present producing method is described below in detail.

### <Electrical steel sheet having forsterite coating>

An electrical steel sheet having a forsterite coating is not particularly limited as long as it includes a steel sheet and a forsterite coating (a coating containing forsterite) disposed on a surface of the steel sheet, and one example thereof is a grain oriented electrical steel sheet.

### <<Component composition of steel sheet>>

A preferred component composition of a steel sheet is described. Hereinafter, the unit "%" of the content of each element means "mass%" unless otherwise specified.

### (C: 0.001 to 0.100%)

C is useful for generating crystal grains of Goss orientation. The C content is preferably 0.001% or more to effectively exhibit this action.

On the other hand, when the C content is too large, poor decarburization may occur even by decarburization annealing. Therefore, the C content is preferably 0.100% or less.

### (Si: 1.0 to 5.0%)

Si increases electrical resistance to reduce iron loss and also stabilizes the BCC structure of iron to enable a heat treatment at a high temperature. Therefore, the Si content is preferably 1.0% or more and more preferably 2.0% or more.

On the other hand, when the Si content is too large, it is difficult to perform cold rolling. Therefore, the Si content is preferably 5.0% or less.

### (Mn: 0.01 to 1.00%)

Mn effectively contributes to the improvement of hot shortness. Further, when S or Se is mixed, Mn forms a precipitate of MnS, MnSe, or the like and functions as an inhibitor of crystal grain growth. Therefore, the Mn content is preferably 0.01% or more.

On the other hand, when the Mn content is too large, the particle size of a precipitate of MnSe or the like may become coarse, and the function as an inhibitor may be lost. Therefore, the Mn content is preferably 1.00% or less.

### (sol.Al: 0.003 to 0.050%)

Al forms AlN, becomes a dispersed second phase, and functions as an inhibitor. Therefore, the Al content is preferably 0.003% or more as soluble aluminum (sol.Al).

On the other hand, when the Al content is too large, AlN may be coarsely precipitated, and the function as an inhibitor may be lost. Therefore, the Al content is preferably 0.050% or less as sol.Al.

### (N: 0.001 to 0.020%)

N forms AlN as with Al. Therefore, the N content is preferably 0.001% or more.

On the other hand, when the N content is too large, blistering or the like may occur during slab heating. Therefore, the N content is preferably 0.020% or less.

### (At least one of S or Se: 0.001 to 0.050%)

S and Se each combine with Mn or Cu to form MnSe, MnS, Cu₂-xSe, or Cu₂-xS, become a dispersed second phase, and function as an inhibitor. Therefore, the total content of at least one of S or Se is preferably 0.001% or more.

On the other hand, when the content of S and Se is too large, incomplete dissolution is caused during slab heating, and also defects may occur on a surface of the steel sheet. Therefore, the total content of at least one of S or Se is preferably 0.050% or less.

### (Other elements)

The component composition described above may further include at least one element (referred to as "element(s) A" for convenience) selected from the group consisting of Cu: 0.01 to 0.20%, Ni: 0.01 to 0.50%, Cr: 0.01 to 0.50%, Sb: 0.01 to 0.10%, Sn: 0.01 to 0.50%, Mo: 0.01 to 0.50%, and Bi: 0.001 to 0.100%.

The inclusion of an element functioning as an auxiliary inhibitor can further improve magnetism. The elements A that are easily segregated on a crystal grain size and a surface are listed as such an element.

A useful effect can be obtained by setting the element A content to a value greater than or equal to the lower limit of the associated range above. Meanwhile, when the element A content is too large, failure of secondary recrystallization may easily occur, and therefore the element A content is preferably lower than or equal to the upper limit of the associated range above.

The component composition described above may further include at least one element selected from the group consisting of B: 0.001 to 0.010%, Ge: 0.001 to 0.100%, As: 0.005 to 0.100%, P: 0.005 to 0.100%, Te: 0.005 to 0.100%, Nb: 0.005 to 0.100%, Ti: 0.005 to 0.100%, and V: 0.005 to 0.100%.

This further enhances the ability of restraining the crystal grain growth, and a higher magnetic flux density is stably obtained.

### (Balance)

The balance of the component composition described above consists of Fe and inevitable impurities.

### <<Method for producing electrical steel sheet having forsterite coating>>

A cold rolled sheet of an electrical steel sheet is subjected to electrolytic degreasing using, for instance, an alkaline degreasing bath. Then, primary recrystallization annealing and decarburization annealing are performed, and subsequently, an annealing separator containing MgO is applied, whereafter finishing annealing is performed. In this way, an electrical steel sheet that is a finishing annealed sheet having on its surface a forsterite-containing coating (forsterite coating) as a finishing annealing coating is obtained.

### <Pretreatment coating-forming agent>

Next, a pretreatment coating-forming agent applied onto the forsterite coating of the electrical steel sheet is described.

### <<Phosphate>>

The pretreatment coating-forming agent contains a phosphate.

The phosphate preferably contains at least one metal element selected from the group consisting of Mg, Ca, Ba, Sr, Zn, Al, and Mn. One phosphate may be used alone, or two or more phosphates may be used in combination. By using two or more phosphates in combination, physical property values of the pretreatment coating can be precisely controlled. The phosphate is preferably a primary phosphate (biphosphate) for the reason of ease of availability.

### <<Chromium compound>>

The pretreatment coating-forming agent is a so-called chromium-free substance.

Specifically, the content of a chromium compound (chromic acid compound) such as chromic anhydride (chromium trioxide), chromate, or dichromate is, in terms of the amount of elemental chromium (Cr), 1.00 parts by mass or less, preferably 0.10 parts by mass or less, and more preferably 0.01 parts by mass or less with respect to 100 parts by mass of solid contents of the phosphate.

### <<Colloidal silica>>

The pretreatment coating-forming agent may contain colloidal silica.

The colloidal silica content is, in terms of an SiO₂ solid content, for instance 15 parts by mass or more, and for the sake of good wettability between the pretreatment coating and an insulating coating-forming agent, preferably 30 parts by mass or more, more preferably 45 parts by mass or more, and even more preferably 60 parts by mass or more with respect to 100 parts by mass of solid contents of the phosphate.

For the same reason, the colloidal silica content is, in terms of an SiO₂ solid content, for instance 260 parts by mass or less, preferably 230 parts by mass or less, more preferably 200 parts by mass or less, and even more preferably 170 parts by mass or less with respect to 100 parts by mass of solid contents of the phosphate.

### <<Metal compound>>

The pretreatment coating-forming agent may contain a compound containing a metal element (metal compound).

The metal compound is a substance different from the foregoing phosphate, chromium compound, and colloidal silica.

The metal element contained in the metal compound is, for example, at least one selected from the group consisting of Ti, Zr, Hf, V, Mg, Zn, and Nb.

The metal compound is, for instance, an oxide or nitride which contains those metal elements, and the form thereof is a particle for example.

The metal element contained in the metal compound may be at least one selected from the group consisting of Mg, Al, Ca, Ba, Sr, Zn, and Mn.

The metal compound is, for instance, a nitrate, sulfate, chloride, iodide, or organic acid salt which contains those metal elements, and the form thereof is a water-soluble compound for example.

The metal compound content is, in terms of the amount of the metal element, for instance 3 parts by mass or more, preferably 5 parts by mass or more, more preferably 8 parts by mass or more, and even more preferably 10 parts by mass or more with respect to 100 parts by mass of solid contents of the phosphate.

On the other hand, the metal compound content is, in terms of the amount of the metal element, for instance 75 parts by mass or less, preferably 60 parts by mass or less, more preferably 40 parts by mass or less, and even more preferably 30 parts by mass or less with respect to 100 parts by mass of solid contents of the phosphate.

When the metal compound content is within the foregoing range, a contact angle of an insulating coating-forming agent with respect to the pretreatment coating is small, resulting in more excellent appearance of an insulating coating as well as more excellent rust resistance.

Water is preferred as a solvent of the pretreatment coating.

The pretreatment coating-forming agent may have the same composition as that of an insulting coating-forming agent described below.

### <Insulating coating-forming agent>

Next, an insulating coating-forming agent applied onto the pretreatment coating is described.

### <<Phosphate>>

The insulating coating-forming agent contains a phosphate.

The phosphate preferably contains at least one metal element selected from the group consisting of Mg, Ca, Ba, Sr, Zn, Al, and Mn. One phosphate may be used alone, or two or more phosphates may be used in combination. By using two or more phosphates in combination, physical property values of the insulating coating can be precisely controlled. The phosphate is preferably a primary phosphate (biphosphate) for the reason of ease of availability.

### <<Colloidal silica>>

The insulating coating-forming agent contains colloidal silica.

The colloidal silica content is, in terms of an SiO₂ solid content, preferably 50 parts by mass or more, more preferably 60 parts by mass or more, and even more preferably 70 parts by mass or more with respect to 100 parts by mass of solid contents of the phosphate in order to obtain good appearance and rust resistance.

For the same reason, the colloidal silica content is, in terms of an SiO₂ solid content, preferably 250 parts by mass or less, more preferably 235 parts by mass or less, and even more preferably 220 parts by mass or less with respect to 100 parts by mass of solid contents of the phosphate.

### <<Cationic surfactant>>

The insulating coating-forming agent contains a cationic surfactant. Owing to this, the speed of wet-spreading of the insulating coating-forming agent applied on the pretreatment coating is increased, and the leveling is easily accelerated. In addition, the rust resistance is more excellent.

While the reason of this is not clear, it is assumed as follows.

Among substances (compounds) contained in the insulating coating-forming agent, a particulate compound has a surface that is negatively charged, and the cationic surfactant is adsorbed to this particulate compound. When the insulating coating-forming agent is applied onto the pretreatment coating, the cationic surfactant is, together with the particulate compound, distributed to the interface between the pretreatment coating and the insulating coating-forming agent, and the interfacial free energy is decreased. Consequently, the insulating coating-forming agent containing a particulate compound easily wets and spreads.

Aside from that, a carbide derived from the cationic surfactant is concentrated at the surface of the insulating coating during baking, thus forming a surface having less wettability with water. This configuration facilitates the suppression of dew condensation on an electrical steel sheet provided with an insulating coating during storage, thus obtaining good rust resistance.

The cationic surfactant content is for instance 0.1 parts by mass or more, preferably 0.2 parts by mass or more, and more preferably 0.4 parts by mass or more with respect to 100 parts by mass of solid contents of the phosphate in order to obtain the effect of addition of the cationic surfactant.

However, when the cationic surfactant content is too large, the viscosity of the insulating coating-forming agent is increased, ribbing defects easily occur, and the appearance of the insulating coating may be insufficient.

Thus, the cationic surfactant content is for instance 8.0 parts by mass or less, preferably 7.0 parts by mass or less, and more preferably 5.0 parts by mass or less with respect to 100 parts by mass of solid contents of the phosphate.

### <<Chromium compound>>

The insulating coating-forming agent is a so-called chromium-free substance.

Specifically, the content of a chromium compound (chromic acid compound) such as chromic anhydride (chromium trioxide), chromate, or dichromate is, in terms of the amount of Cr, 1.00 parts by mass or less, preferably 0.10 parts by mass or less, and more preferably 0.01 parts by mass or less with respect to 100 parts by mass of solid contents of the phosphate.

When the chromium compound content is within the above range, the insulating coating-forming agent has good wettability with respect to the pretreatmen coating, although the reason thereof is unknown.

### <<Metal compound>>

The insulating coating-forming agent may contain a compound containing a metal element (metal compound).

The metal compound is a substance different from the foregoing phosphate, chromium compound, colloidal silica, and cationic surfactant.

A metal element contained in the metal compound is, for example, at least one selected from the group consisting of Ti, Zr, Hf, V, Mg, Zn, and Nb.

The metal compound is, for instance, an oxide or nitride which contains those metal elements, and the form thereof is a particle for example.

A metal element contained in the metal compound may be at least one selected from the group consisting of Mg, Al, Ca, Ba, Sr, Zn, and Mn.

The metal compound is, for instance, a nitrate, sulfate, chloride, iodide, or organic acid salt which contains those metal elements, and the form thereof is a water-soluble compound for example.

The metal compound content is, in terms of the amount of the metal element, for instance 3 parts by mass or more, and for the reason that the resulting insulating coating has more excellent heat resistance, preferably 5 parts by mass or more, more preferably 8 parts by mass or more, and even more preferably 10 parts by mass or more with respect to 100 parts by mass of solid contents of the phosphate.

On the other hand, the metal compound content is, in terms of the amount of the metal element, for instance 75 parts by mass or less, and for the reason that the insulating coating-forming agent has a smaller contact angle with respect to the pretreatment coating and this leads to more excellent appearance of the insulating coating, preferably 60 parts by mass or less, more preferably 40 parts by mass or less, and even more preferably 30 parts by mass or less with respect to 100 parts by mass of solid contents of the phosphate.

Water is preferred as a solvent of the insulating coating-forming agent.

### <Formation of pretreatment coating>

The pretreatment coating-forming agent is applied onto the forsterite coating of the electrical steel sheet and then baked under the conditions (the baking temperature and the hydrogen concentration in a baking atmosphere) described later. The pretreatment coating is thereby formed on the opposite surfaces of the electrical steel sheet.

### <<Baking temperature>>

Too low (or too high) a baking temperature for the pretreatment coating causes insufficient wettability between the pretreatment coating and the insulating coating-forming agent, and good appearance of the insulating coating cannot be obtained.

Thus, the baking temperature for the pretreatment coating is 130°C or higher, preferably 190°C or higher, and more preferably 250°C or higher. On the other hand, the baking temperature for the pretreatment coating is 600°C or lower, preferably 530°C or lower, and more preferably 450°C or lower.

### <<Hydrogen concentration in baking atmosphere>>

Hydrogen is contained in a baking atmosphere. This is considered to accelerate drying and a dehydration reaction of the pretreatment coating.

When the hydrogen concentration in a baking atmosphere is too low, a gap is generated between the pretreatment coating and the forsterite coating or between the pretreatment coating and the insulating coating, and the pretreatment coating and/or the insulating coating is bulged, resulting in an insufficient lamination factor.

Thus, the hydrogen concentration in a baking atmosphere is 0.01 vol% or more, preferably 0.50 vol% or more, and more preferably 1.00 vol% or more.

On the other hand, when the hydrogen concentration in a baking atmosphere is too high, surface properties of the pretreatment coating deteriorate due to drying, insufficient wettability is caused between the pretreatment coating and the insulating coating-forming agent, and the insulating coating having good appearance and rust resistance cannot be obtained.

Hence, the hydrogen concentration in a baking atmosphere is 10.0 vol% or less, preferably 8.0 vol% or less, and more preferably 5.0 vol% or less.

For the baking atmosphere for the pretreatment coating, inert gases such as nitrogen are preferred as the other components (gas) than hydrogen.

The baking time for the pretreatment coating is not particularly limited and is preferably 3 to 120 seconds and more preferably 5 to 100 seconds.

### <<Coating amount>>

The coating amount (per one side) of the pretreatment coating is preferably 3.8 g/m² or less, more preferably 3.2 g/m² or less, and even more preferably 2.5 g/m² or less for the reason that the heat resistance and the rust resistance are more excellent.

The coating amount of the pretreatment coating is controlled by, for example, adjusting the application amount of the pretreatment coating-forming agent. The method of applying the pretreatment coating-forming agent is not particularly limited. The application may be performed with a roll coater, for instance.

### <Cooling>

After formation of the pretreatment coating, the electrical steel sheet having the pretreatment coating formed thereon is cooled before application of the insulating coating-forming agent.

### <<Steel sheet temperature>>

When the temperature of the electrical steel sheet having been cooled is too high, the insulating coating-forming agent subsequently applied transforms before being baked, and the wettability deteriorates, resulting in insufficient appearance and rust resistance.

Thus, the temperature of the electrical steel sheet having been cooled (steel sheet temperature) is 100°C or lower, preferably 80°C or lower, and more preferably 60°C.

### <Formation of insulating coating>

Next, the pretreatment coating-forming agent is applied onto the pretreatment coating of the electrical steel sheet having been cooled, optionally dried under the condition (baking temperature) described later, and then baked. Instead of baking, flattening annealing also serving as baking may be performed. The insulating coating is thereby formed on the opposite surfaces of the electrical steel sheet. That is, an electrical steel sheet provided with an insulating coating is obtained.

The insulating coating formed has excellent appearance. Further, the insulating coating has low wettability with respect to moisture in the air and has good rust resistance as well as excellent heat resistance.

While the reason of this is not clear, it is assumed as follows.

The pretreatment coating is baked for the second time at the baking of the insulating coating, a dehydration reaction of the pretreatment coating decreases, and consequently, a formation reaction of the insulating coating through drying and baking is accelerated. As a result, the number of hydrophilic groups at the surface of the insulating coating decreases, the wettability with respect to water lowers, and a surface shape having excellent rust resistance is formed. In addition, the acceleration of baking also improves heat resistance.

### <<Baking temperature>>

When the baking temperature for the insulating coating is too low, baking of the insulating coating is insufficient, which leads to insufficient rust resistance and heat resistance. Thus, the baking temperature for the insulating coating is 600°C or higher, preferably 700°C or higher, and more preferably 800°C or higher.

On the other hand, when the baking temperature for the insulating coating is too high, the wettability increases between the insulating coating and moisture in the air, and sufficient rust resistance is not obtained. Thus, the baking temperature for the insulating coating is 1,000°C or lower, preferably 930°C or lower, and more preferably 860°C or lower.

The baking atmosphere for the insulating coating is preferably an inert gas atmosphere such as a nitrogen atmosphere.

The baking time for the pretreatment coating is not particularly limited and is preferably 5 to 120 seconds and more preferably 10 to 100 seconds.

### <Total coating amount>

When the coating amount of the pretreatment coating and the insulating coating is too large, baking behavior deviates from appropriate conditions, and consequently the coating(s) is cracked, resulting in insufficient rust resistance.

Hence, the total coating amount (per one side) of the pretreatment coating and the insulating coating is 7.5 g/m² or less, preferably 7.0 g/m² or less, and more preferably 6.5 g/m² or less.

The coating amount of the insulating coating is controlled by, for example, adjusting the application amount of the insulating coating-forming agent. The method of applying the insulating coating-forming agent is not particularly limited. The application may be performed with a roll coater, for instance.

### [EXAMPLE]

The invention is specifically described below by way of examples. However, the invention is not limited to the examples described below.

### [Test 1]

### <Production of electrical steel sheet provided with insulating coating>

### <<Preparation of electrical steel sheet having forsterite coating>>

A grain oriented electrical steel sheet (electrical steel sheet) having undergone finishing annealing and having a sheet thickness of 0.2 mm was prepared. Since the electrical steel sheet had undergone finishing annealing, a forsterite coating was formed on the surface (the same applies to Tests 2 and 3 to be described later).

### <<Preparation of pretreatment coating-forming agent and insulating coating-forming agent>>

Next, a pretreatment coating-forming agent and an insulating coating-forming agent with component compositions as shown in Table 1 below were prepared. As a solvent, pure water was used (the same applies to Tests 2 and 3 to be described later).

As a phosphate, a primary phosphate was used for each. In Table 1 below, a magnesium phosphate is stated as "Mg phosphate". Other phosphates are stated in the same manner (the same applies to Tests 2 and 3 to be described later).

As colloidal silica, SNOWTEX C manufactured by Nissan Chemical Corporation was used (the same applies to Tests 2 and 3 to be described later).

In Table 1 below, "parts by mass" of a phosphate means parts by mass in terms of solid contents. "Parts by mass" of colloidal silica means parts by mass in terms of an SiO₂ solid content (the same applies to Tests 2 and 3 to be described later).

As a cationic surfactant, SANISOL C manufactured by Kao Corporation was used.

### <<Formation of pretreatment coating>>

The prepared pretreatment coating-forming agent was applied onto the forsterite coating of the electrical steel sheet. When the agent was applied, the application amount was adjusted such that the coating amount (per one side) of a pretreatment coating to be formed was the value as shown in Table 1 below (the same applies to Tests 2 and 3 to be described later).

Subsequently, baking was performed under the conditions (the baking temperature and the hydrogen concentration in a baking atmosphere) shown in Table 1 below to form a pretreatment coating. In the baking atmosphere, nitrogen was used except for hydrogen, and the baking time was 30 seconds (the same applies to Tests 2 and 3 to be described later).

In the case where no pretreatment coating was formed, "-" was provided in the relevant spaces in Table 1 below.

### <<Cooling>>

Thereafter, the electrical steel sheet having the pretreatment coating formed thereon was cooled to the steel sheet temperature shown in Table 1 below.

### <<Formation of insulating coating>>

After the cooling, the prepared insulating coating-forming agent was applied onto the pretreatment coating. When the agent was applied, the application amount was adjusted such that the total coating amount (per one side) of the pretreatment coating and an insulating coating to be formed was the value as shown in Table 1 below (the same applies to Tests 2 and 3 to be described later).

Subsequently, baking was performed for 30 seconds in a nitrogen atmosphere under the condition (baking temperature) shown in Table 1 below to form an insulating coating. Thus, an electrical steel sheet provided with an insulating coating was obtained.

### <Evaluation>

Various properties of each electrical steel sheet provided with an insulating coating thus obtained were evaluated through tests below.

For a contact angle, a test was conducted at the time when the pretreatment coating had been formed.

### <<Contact angle>>

A contact angle between the insulating coating-forming agent and the pretreatment coating (in the case where no pretreatment coating was formed, the forsterite coating) was measured with a contact angle meter (DMo-501, manufactured by Kyowa Interface Science Co., Ltd.).

The measurement was performed 1 second after a droplet of the insulating coating-forming agent landed on the pretreatment coating (or the forsterite coating) and 5 seconds after the same operation, and the average thereof was defined as a contact angle. The results are shown in Table 1 below. When the contact angle was not more than 60°, the wettability between the insulating coating-forming agent and the pretreatment coating (or the forsterite coating) was rated as good.

### <<Appearance>>

The state of a surface of the insulating coating was visually observed to obtain the incidence rate of application unevenness such as ribbing defects, wave patterns, and Benard cells (the percentage with respect to the area of the surface of the insulating coating).

When the incidence rate of application unevenness was more than 15%, "Poor" was provided in Table 1 below, when the incidence rate was not more than 15% and more than 10%, "Average" was provided, when the incidence rate was not more than 10% and more than 5%, "Good" was provided, and when the incidence rate was not more than 5%, "Excellent" was provided.

When the result was Excellent, Good, or Average, the appearance of the insulating coating was rated as good.

### <<Rust resistance>>

Each electrical steel sheet provided with an insulating coating was sheared to obtain three specimens (50 mm x 50 mm).

The obtained three specimens were retained in an air atmosphere with a relative humidity of 98% or more and a temperature of 50°C for 50 hours. Thereafter, the surfaces of the specimens were observed, and the percentage of the area where rust is generated (rusting area fraction) was obtained.

The rusting area fraction being not less than 5.0% was defined as Poor, the rusting area fraction being not less than 2.5% and less than 5.0% as Average, the rusting area fraction being more than 0% and less than 2.5% as Good, and no rusting (the rusting area fraction being 0%) as Excellent.

When all of the three specimens were Excellent, "A" was provided in Table 1 below; when their results were the combination of Excellent and Good, "B" was provided; when all were Good, "C" was provided; when their results were the combination of Good and Average, "D" was provided; when all were Average, "E" was provided; and when all were Poor, "Poor" was provided.

When the final result was A, B, C, D, or E, the rust resistance was rated as good.

### <<Heat resistance>>

The heat resistance was evaluated by a drop weight test in which the heat resistance during stress relief annealing was assumed.

Specifically, each electrical steel sheet provided with an insulating coating was sheared to obtain ten specimens (50 mm x 50 mm). The ten specimens were stacked on one another and annealed at 830°C for 3 hours under a compressive load of 2 kg/cm². Thereafter, a weight of 500 g was dropped from a height of 20 cm, and the separation state of the ten specimens were checked. The height from which the weight was dropped was increased by 10 cm in increments until all of the ten specimens were separated from one another. The height (dropping height) of the weight when all of the ten specimens were separated from one another was provided in Table 1 below.

In the case where the ten specimens were all separated from one another upon the annealing, the dropping height was defined as 0 cm. When the dropping height was not more than 40 cm, the heat resistance of the insulating coating was rated as good.

### <<Lamination factor>>

The lamination factor was evaluated by the method according to JIS C 2550.

When the lamination factor was less than 97.0%, "Poor" was provided in Table 1 below, when the lamination factor was not less than 97.0% and not more than 97.4%, "Good" was provided, and when the lamination factor was more than 97.4% and not more than 97.8%, "Excellent" was provided. When the result was Excellent or Good, the lamination factor was rated as good.

In Table 1 below, the underlined figures are those outside the ranges of the invention (or those outside the preferred ranges). The same applies to Tables 2 to 3 to be described later.

### [Table 1]

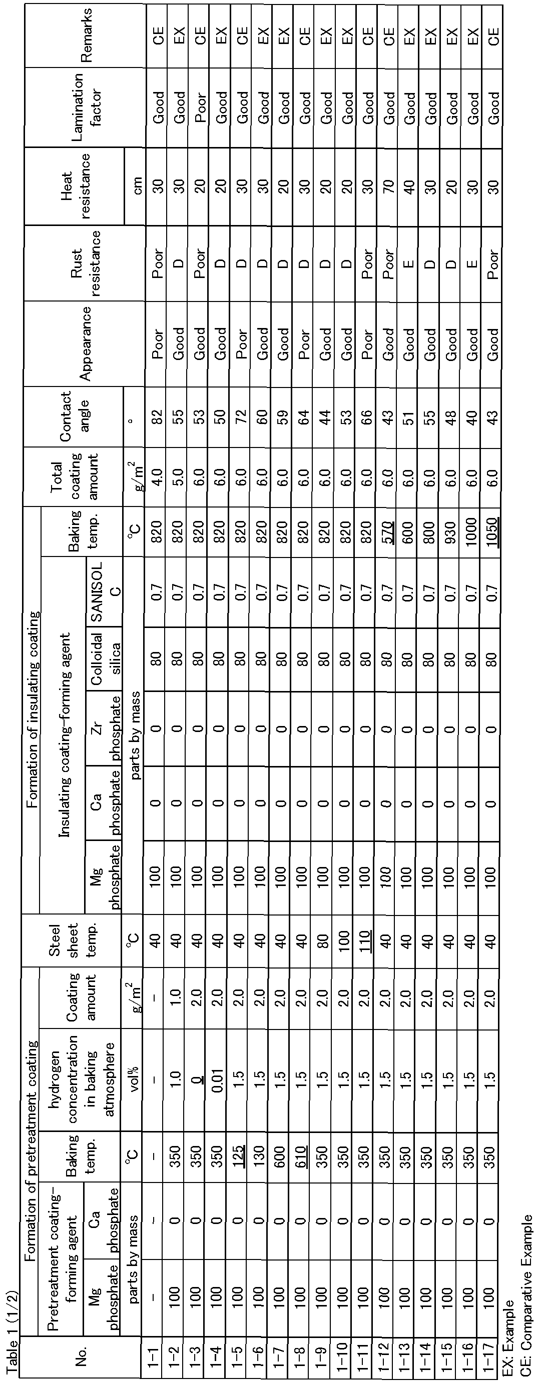

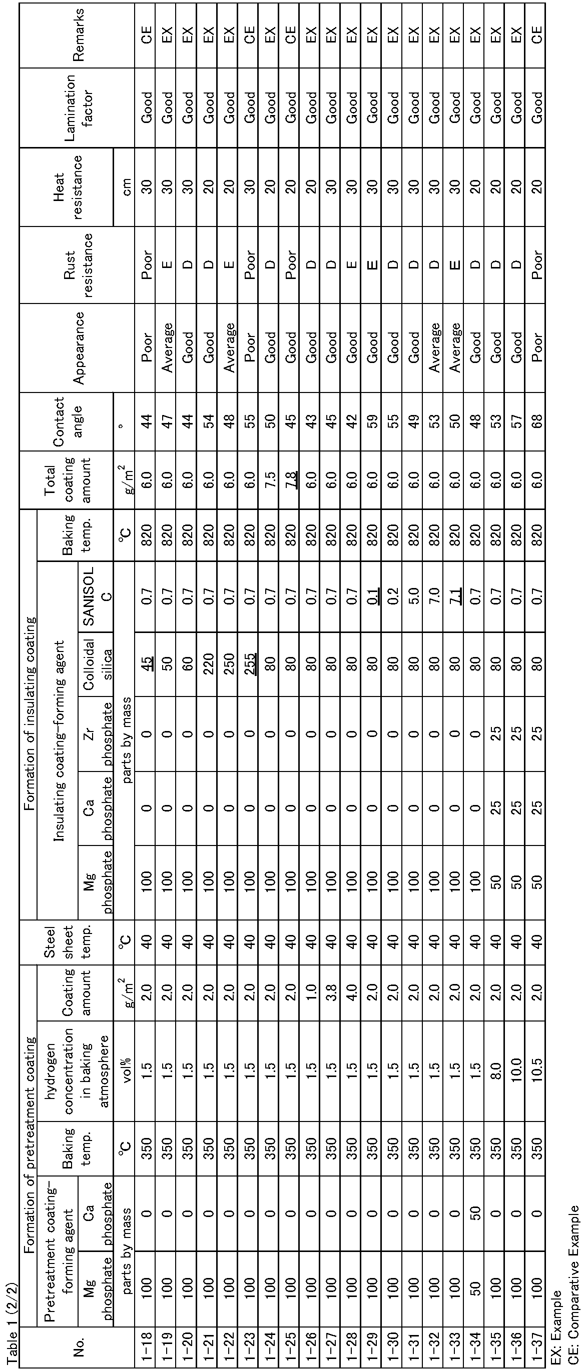

### <Summary of Evaluation Results>

As shown in Table 1 above, the electrical steel sheet provided with an insulating coating of each Example was excellent in all of appearance, rust resistance, heat resistance, and a lamination factor despite the chromium-free pretreatment coating and the chromium-free insulating coating.

In contrast, the electrical steel sheet provided with an insulating coating of each Comparative Example was insufficient in at least one of appearance, rust resistance, heat resistance, or a lamination factor.

Comparing No. 1-13 with No. 1-14, No. 1-14 with the baking temperature of the insulating coating being 800°C had better rust resistance and heat resistance than those of No. 1-13 with the baking temperature being 600°C.

Comparing No. 1-15 with No. 1-16, No. 1-15 with the baking temperature of the insulating coating being 930°C had better rust resistance and heat resistance than those of No. 1-16 with the baking temperature being 1,000°C.

Comparing No. 1-19 with No. 1-20, No. 1-20 with the colloidal silica content of the insulating coating-forming agent being 60 parts by mass had better appearance and rust resistance than those of No. 1-19 with the colloidal silica content being 50 parts by mass.

Comparing No. 1-21 with No. 1-22, No. 1-21 with the colloidal silica content of the insulating coating-forming agent being 220 parts by mass had better appearance and rust resistance than those of No. 1-22 with the colloidal silica content being 250 parts by mass.

When Nos. 1-26 to 1-28 are compared, No. 1-27 with a coating amount (per one side) of the pretreatment coating of 3.8 g/m² had better rust resistance than that of No. 1-28 with the coating amount being 4.0 g/m².

Further, No. 1-26 with the coating amount (per one side) of the pretreatment coating being 1.0 g/m² had better heat resistance than that of No. 1-27 with the coating amount being 3.8 g/m².

When Nos. 1-30 to 1-32 are compared, Nos. 1-30 and 1-31 with the cationic surfactant content of the insulating coating-forming agent being not more than 5.0 parts by mass had better appearance than that of No. 1-32 with the cationic surfactant content being 7.0 parts by mass.

When Nos. 1-35 to 1-37 are compared, the contact angle increased with increasing hydrogen concentration in a baking atmosphere in formation of the pretreatment coating in the order of 8.0 vol%, 10.0 vol%, and 10.5 vol%. In particular, No. 1-37 (Comparative Example) with the hydrogen concentration in a baking atmosphere being 10.5 vol% was insufficient in both appearance and rust resistance.

### [Test 2]

### <Production of electrical steel sheet provided with insulating coating>

A pretreatment coating-forming agent and an insulating coating-forming agent were prepared with component compositions as shown in Table 2 below.

As a metal compound, water-soluble Mg(NO₃)₂ and Ca gluconate as well as TiO₂ and ZnO were used.

The term "parts by mass" of the metal compound in Table 2 below means parts by mass in terms of the amount of the metal element (the same applies to Test 3 to be described later).

As a cationic surfactant, ACETAMIN 86 manufactured by Kao Corporation was used.

The pretreatment coating-forming agent prepared was applied onto the forsterite coating of the electrical steel sheet and baked under the conditions (the baking temperature and the hydrogen concentration in a baking atmosphere) shown in Table 2 below to form a pretreatment coating. Thereafter, the electrical steel sheet having the pretreatment coating formed thereon was cooled to the steel sheet temperature shown in Table 2 below. Subsequently, the insulating coating-forming agent was applied onto the pretreatment coating and baked for 30 seconds in a nitrogen atmosphere under the condition (baking temperature) shown in Table 2 below to form an insulating coating.

Thus, an electrical steel sheet provided with an insulating coating was obtained.

### <Evaluation>

Various properties of each electrical steel sheet provided with an insulating coating thus obtained were evaluated in the same manner as in Test 1. The results are shown in Table 2 below.

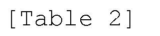

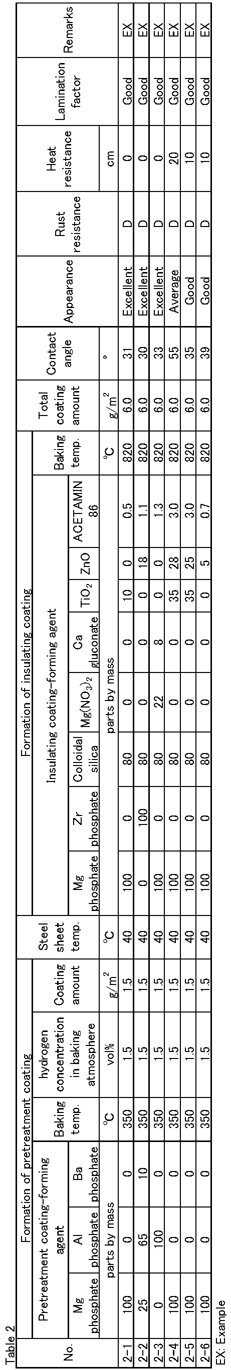

### <Summary of Evaluation Results>

As shown in Table 2 above, the electrical steel sheet provided with an insulating coating of each Example (Nos. 2-1 to 2-6) was excellent in all of appearance, rust resistance, heat resistance, and a lamination factor.

Comparing No. 2-1 with No. 2-6, No. 2-1 with the metal compound content (in total) of the insulating coating-forming agent being 10 parts by mass had a smaller contact angle and better appearance and heat resistance than those of No. 2-6 with the metal compound content being 5 parts by mass.

When Nos. 2-3 to 2-5 are compared, No. 2-5 with the metal compound content (in total) of the insulating coating-forming agent being 60 parts by mass had smaller contact angle and better appearance and heat resistance than those of No. 2-4 with the metal compound content being 63 parts by mass.

Further, No. 2-3 with the metal compound content (in total) of the insulating coating-forming agent being 30 parts by mass had a much smaller contact angle and much better appearance and heat resistance than those of No. 2-5 with the metal compound content being 60 parts by mass.

### [Test 3]

### <Production of electrical steel sheet provided with insulating coating>

A pretreatment coating-forming agent and an insulating coating-forming agent were prepared with component compositions as shown in Table 3 below.

As a metal compound, Mg(NO₃)₂ and ZrO₂ were used.

As a cationic surfactant, ACETAMIN 86 manufactured by Kao Corporation was used.

The pretreatment coating-forming agent prepared was applied onto the forsterite coating of the electrical steel sheet and baked under the conditions (the baking temperature and the hydrogen concentration in a baking atmosphere) shown in Table 3 below to form a pretreatment coating. Thereafter, the electrical steel sheet having the pretreatment coating formed thereon was cooled to the steel sheet temperature shown in Table 3 below. Subsequently, the insulating coating-forming agent was applied onto the pretreatment coating and baked for 30 seconds in a nitrogen atmosphere under the condition (baking temperature) shown in Table 3 below to form an insulating coating.

Thus, an electrical steel sheet provided with an insulating coating was obtained.

### <Evaluation>

Various properties of each electrical steel sheet provided with an insulating coating thus obtained were evaluated in the same manner as in Test 1. The results are shown in Table 3 below.

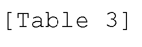

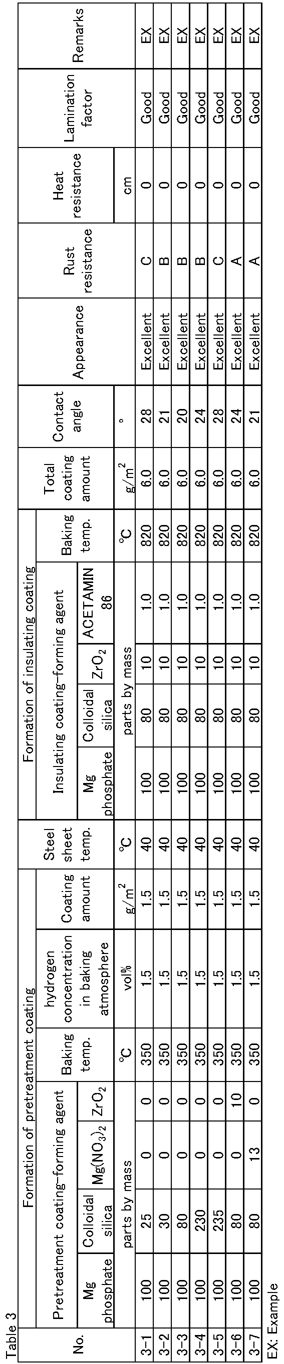

### <Summary of Evaluation Results>

As shown in Table 3 above, the electrical steel sheet provided with an insulating coating of each Example (Nos. 3-1 to 3-7) was excellent in all of appearance, rust resistance, heat resistance, and a lamination factor.

Comparing No. 3-1 with No. 3-2, No. 3-2 with the colloidal silica content of the pretreatment coating-forming agent being 30 parts by mass had smaller contact angle and better rust resistance than those of No. 3-1 with the colloidal silica content being 25 parts by mass.

Comparing No. 3-4 with No. 3-5, No. 3-4 with the colloidal silica content of the pretreatment coating-forming agent being 230 parts by mass had smaller contact angle and better rust resistance than those of No. 3-5 with the colloidal silica content being 235 parts by mass.

Nos. 3-6 and 3-7 with the pretreatment coating-forming agents containing the metal compound had better rust resistance than Nos. 3-1 to 3-4 with the pretreatment coating-forming agents containing no metal compound.

## Claims

1. A method for producing an electrical steel sheet provided with an insulating coating, the method comprising:
forming a pretreatment coating by applying a pretreatment coating-forming agent onto an electrical steel sheet having a forsterite coating, followed by baking at a baking temperature of 130 to 600°C in a baking atmosphere in which a hydrogen concentration is 0.01 to 10.0 vol%;
subsequently cooling the electrical steel sheet to a steel sheet temperature of 100°C or lower; and
forming an insulating coating by applying an insulating coating-forming agent onto the pretreatment coating, followed by baking at a baking temperature of 600 to 1,000°C,
wherein the pretreatment coating-forming agent contains a phosphate,
in the pretreatment coating-forming agent, a content of a chromium compound is, in terms of an amount of elemental chromium, 1.00 parts by mass or less with respect to 100 parts by mass of solid contents of the phosphate,
the insulating coating-forming agent contains a phosphate, colloidal silica, and a cationic surfactant,
in the insulating coating-forming agent, a content of a chromium compound is, in terms of an amount of elemental chromium, 1.00 parts by mass or less with respect to 100 parts by mass of solid contents of the phosphate,
in the insulating coating-forming agent, a content of the colloidal silica is, in terms of an SiO₂ solid content, 50 to 250 parts by mass with respect to 100 parts by mass of solid contents of the phosphate, and
a total coating amount of the pretreatment coating and the insulating coating per one side is 7.5 g/m² or less.

2. The method for manufacturing an electrical steel sheet provided with an insulating coating according to claim 1,
wherein in the insulating coating-forming agent, a content of the cationic surfactant is 0.2 to 7.0 parts by mass with respect to 100 parts by mass of solid contents of the phosphate.

3. The method for manufacturing an electrical steel sheet provided with an insulating coating according to claim 1 or 2,
wherein the insulating coating-forming agent contains a metal compound, and
in the insulating coating-forming agent, a content of the metal compound is, in terms of an amount of metal element, 5 to 60 parts by mass with respect to 100 parts by mass of solid contents of the phosphate.

4. The method for manufacturing an electrical steel sheet provided with an insulating coating according to any one of claims 1 to 3,
wherein the pretreatment coating-forming agent contains colloidal silica.

5. The method for manufacturing an electrical steel sheet provided with an insulating coating according to claim 4,
wherein in the pretreatment coating-forming agent, a content of the colloidal silica is, in terms of an SiO₂ solid content, 30 to 230 parts by mass with respect to 100 parts by mass of solid contents of the phosphate.
